# EUROPÄISCHE PATENTSCHRIFT

(11) **EP 0 829 627 B1**
(45) Veröffentlichungstag und Bekanntmachung des Hinweises auf die Patenterteilung: **21.03.2001**
(21) Anmeldenummer: 97112226.2
(22) Anmeldetag: 17.07.1997
(51) Int. Cl.: F02B 43/00, F02D 9/16

(54) **Gasmotor mit Walzen-Drehschieber**
Gas engine with rotary gate valve
Moteur à gaz à tiroir rotatif

(30) Priorität: 24.08.1996 DE 19634299
(43) Veröffentlichungstag der Anmeldung: 18.03.1998
(73) Patentinhaber: DEUTZ Aktiengesellschaft, 51063 Köln (DE)
(72) Erfinder: Weickel, Hans, 68307 Mannheim (DE); Stellwagen, Karl, 68219 Mannheim (DE); Willms, Heinz, 69469 Weinheim (DE)
(74) Vertreter: Nau, Walter, Dipl.-Ing.

(56) Entgegenhaltungen:
- EP-A- 0 465 944
- BE-A- 361 500
- DE-A- 3 908 686
- DE-C- 348 431
- DE-C- 818 593
- FR-E- 51 359
- GB-A- 152 426
- US-A- 2 331 809
- WILL: "Erweiterung des Einsatzbereichs des MAN-B&W-Dieselmotors zum Viertakt-Gas-Ottomotor L-V 20/27 NG-20/31 NG" MTZ MOTORTECHNISCHE ZEITSCHRIFT, Bd. 46, Nr. 2, 1.Februar 1985, GMUEND DE, Seiten 51-55, XP002062315

## Beschreibung

Die Erfindung betrifft einen Gasmotor, insbesondere Otto-Gasmotor, bestehend aus einem Kurbelgehäuse mit zumindest einer einen Verbrennungsraum aufweisenden Zylinder-Zylinderkopf-Einheit, wobei dem Verbrennungsraum ein von einem Mischer einstellbares Luft-Gas-Gemisch zuführbar ist, dessen dem Brennraum zugeführte Menge über eine als Drehschieber ausgebildete Mengensteuereinrichtung einstellbar ist.

Ein derartiger Gasmotor ist aus der BE-A 361 500 bekannt. Hier ist sowohl ein Luft-Gas-Gemischregler als auch der Drehschieber in ein Rohr eingebaut, das in nicht dargestellter Art und Weise mit der Brennkraftmaschine verbunden ist.

Bei dem aus der weiter bekannten EP-A 0 465 944 Gasmotor geht es in erster Linie darum, die Schadstoffemission auch bei schwankender Gasqualität und schwankender Ansaugtemperatur der Luft gering zu halten. Dies wird dadurch erreicht, daß die Leistung des Gasmotors über eine Drosselklappe in der Gemischbildung abgegriffen wird und daß die Temperatur im Verbrennungsraum als Mittelwert der in allen Verbrennungsräumen erfaßten mittleren Temperaturen gebildet wird.

Der Erfindung liegt die Aufgabe zugrunde, die Mengensteuereinrichtung derart weiterzubilden, daß diese gegenüber dem Stand der Technik verbessert ist.

Diese Aufgabe wird dadurch gelöst, daß der Drehschieber in eine stirnseitig an eine Brennkraftmaschine angebaute Konsole eingesetzt ist und die Konsole an beiden Seitenwänden einen Befestigungsrahmen aufweist, an die Ladeluftkühler beziehungsweise Gemischkühler anschraubbar sind und daß die Befestigungsrahmen über Kanäle, die von zumindest einer zylinderförmigen Öffnung durchdrungen sind, in die der Drehschieber eingesetzt ist, jenseits des Drehschiebers in die Stirnseite münden und von dort in die entsprechende Ladeluftleitung beziehungsweise Gemischleitung der Brennkraftmaschine übergehen. Dadurch wird zunächst erreicht, daß die dem Brennraum zuzuführende Gemischmenge sehr exakt einstellbar ist. Dabei ist es so, daß mit den bekannten Drosselklappensteuerungen auch schon eine recht genaue Einstellung erreichbar ist, die aber durch die erfindungs gemäße Ausgestaltung noch verbessert werden kann. Dies ist im Hinblick auf günstige Abgasemissionswerte, einen niedrigen Verbrauch und ein gutes Lastregelverhalten von Vorteil. Zum weiteren sind durch diese erfindungsgemäße Ausgestaltung die Betätigungskräfte für den Drehschieber im Vergleich mit einer entsprechenden Drosselklappe geringer. Das hat den Vorteil, daß das entsprechende Steuergerät entsprechend kleiner dimensioniert sein kann, so daß sich hierdurch zumindest kosten- und Bauraumvorteile ergeben.

Zu den Hintergründen dieser sich ergebenden Vorteile und Verbesserungen ist folgendes festzustellen.
Bei einer Drosselklappe beträgt aus Regelungsgründen die maximale Klappenstellung höchstens ca. 60° zur Rohrachse. Daraus folgt, daß die Durchflußkapazität durch die Drosselklappe damit ungefähr nur etwa zur Hälfte nutzbar ist. Dadurch ergibt sich auch bei maximal geöffneter Drosselklappe ein Druckverlust, der bei der Auslegung des Systems mit einem sogenannten Rohrleitungssymmetriefaktor zu berücksichtigen ist. Um die erforderlichen Durchsätze zu gewährleisten, ist es daher notwendig, je nach Ausgestaltung die Drosselklappe im -bezogen zu dem Leitungsdurchmesser- Durchmesser entsprechend groß auszubilden oder zwei oder mehr Drosselklappen parallel zu schalten. Wenn auch dadurch die entsprechenden Mengenströme durch die Drosselklappen geleitet werden können, ergibt sich durch den nach wie vor bestehenden Druckabfall an der Drosselklappe eine Erhöhung des Drehmoments zur Betätigung der Drosselklappe.

Bei der erfindungs gemäßen Ausgestaltung des Drehschiebers wird nun auch davon ausgegangen, daß hier ein Drehwinkel von ca. 60° realisiert wird. Bei dem Drehschieber ist es aber konstruktiv möglich, die den Drehschieber durchdringende Öffnung so auszulegen und anzuordnen, daß diese bei einem Stellwinkel von ca. 60° eine Größe aufweist, die dem vollen Durchmesser der Zu- und Abströmquerschnitte vor und hinter dem Drehschieber entspricht. Um somit den gleichen Durchsatz durch den Drehschieber wie bei einer Drosselklappe zu erreichen, kann der Drehschieber bei gleichen Drehwinkeln entsprechend kleiner ausgebildet sein. Zudem sind die Betätigungskräfte zur Verstellung des Drehschiebers kleiner. Daher kann ein kostengünstigeres kleineres Steuergerät eingesetzt werden.

In Weiterbildung der Erfindung ist der Drehschieber ein Walzen-Drehschieber. Bei den verschiedenen Möglichkeiten der Ausbildung des Drehschiebers, beispielsweise als Kugeldrehschieber, hat sich die Ausbildung als Walzen-Drehschieber besonders geeignet erwiesen.

So ist es in Weiterbildung der Erfindung möglich, mehrere, insbesondere drei übereinander liegende Öffnungen in den Zylindermantel des Walzen-Drehschiebers einzulassen. Dadurch kann die erforderliche Durchflußweite in einfacher Weise aufgeteilt werden und dadurch die Baugröße des Walzen-Drehschiebers verkleinert werden.

In weiterer Ausgestaltung der Erfindung sind die Öffnungen in dem Zylindermantel, vorzugsweise kreisrund oder auch oval ausgebildet. Hier ist eine Auslegung bzw. Optimierung nach individuellen Kriterien durch diese erfindungsgemäße Ausgestaltung leicht möglich.

In Weiterbildung der Erfindung ist der Walzen-Drehschieber rohrförmig ausgebildet.

Dabei ist es so, daß insbesondere bei einer rohrförmigen Ausbildung des Walzen-Drehschiebers die in Weiterbildung der Erfindung angegebene Optimierung der Wandstärke des Zylindermantels zumindest in den die Öffnung umgebenden Bereichen nach festigkeitsmechanischen und strömungswiderstandsmäßigen Gesetzmäßigkeiten leicht realisierbar ist. Hier ist es so, daß diese Optimierung, zunächst strömungswiderstandsmäßig vorgenommen wird und begleitend überprüft wird, ob bei dieser vorgenommenen Optimierung diese noch festigkeitsmechanisch ausreichend ist.

Mit einem in Weiterbildung der Erfindung aus einem Gußwerkstoff gefertigten Walzen-Drehschieber ist ein sehr günstiges Preis-Leistungs-Verhältnis realisierbar. Dagegen ist bei einer Fertigung des Walzen-Drehschiebers aus einem rohrförmigen Stahlwerkstoff dieser konstruktionsbedingt mit dünneren Wandstärken fertigbar, was bezüglich des Strömungswiderstandes - wie zuvor ausgeführtvorteilhaft ist. Auch ist es so, daß hier bei entsprechenden Kleinserien durch den Entfall von ansonsten anzufertigenden Gußformen kostengünstig produziert werden kann.

Weitere vorteilhafte Ausgestaltungen der Erfindung sind der Zeichnungsbeschreibung zu entnehmen, in der ein den Figuren dargestelltes Ausführungsbeispiel der Erfindung näher beschrieben ist.

Die Zeichnung zeigt in Form einer Explosionszeichnung gemäß
- Figur 1a:: eine Konsole zum Anbau an die Brennkraftmaschine und

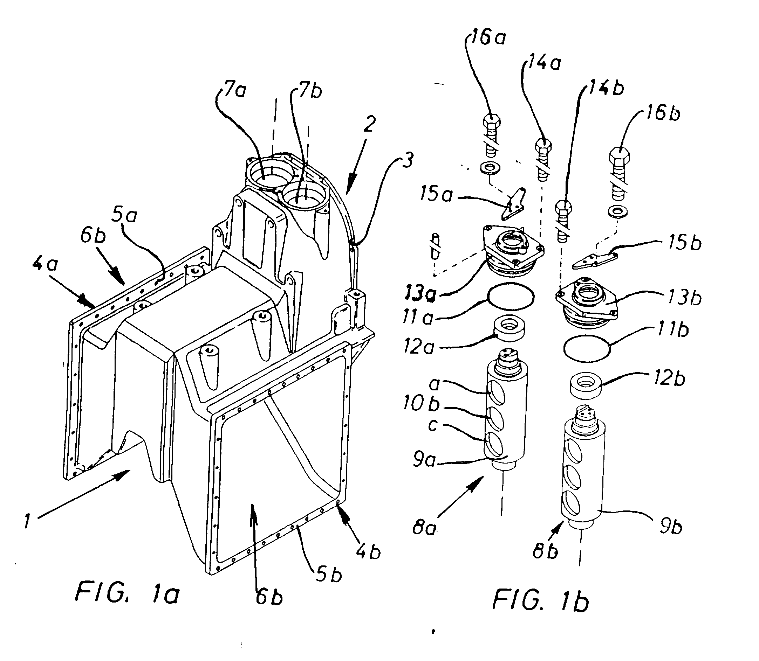

- Figur 1b:: Walzen-Drehschieber, die in die Konsole eingesetzt werden.

Die Konsole 1 gemäß Fig. 1a wird an die dem Schwungrad gegenüberliegende Stirnseite einer Brennkraftmaschine mit der Stirnseite 2 angebaut. Hierzu ist an der Stirnseite 2 ein umlaufender Flansch 3 mit Befestigungsbohrungen vorgesehen, durch die entsprechende Befestigungsschrauben durchsteckbar sind.

An den beiden Seitenwänden 4a, 4b weist die Konsole 1 je einen Befestigungsrahmen 5a, 5b auf, an den Ladeluft- beziehungsweise Gemischkühler anschraubbar sind. Diesen Ladeluft- beziehungsweise Gemischkühlern wird von zumindest einem Abgasturbolader verdichtete Verbrennungsluft oder Gemisch zugeführt, die dann über Kanäle 6a, 6b, die von den Seitenwänden 4a, 4b aufgehen, in die Konsole 1 eingeleitet wird. Die Kanäle 6a, 6b leiten das Gemisch (Gas-Luft) in Richtung zu der Stirnseite 2 um, wobei im Bereich der Stirnseite 2 die Kanäle 6a, 6b von zwei nebeneinanderliegenden, parallelen, zylinderförmigen Öffnungen 7a, 7b durchdrungen werden. Die Kanäle 6a, 6b münden dann an der Stirnseite 2 und gehen von dort in entsprechende Ladeluft- beziehungsweise Gemisch leitungen der Brennkraftmaschine über. Diese Ladeluft- beziehungsweise Gemischleitungen sind über Gaswechseventile mit den Brennräumen der einzelnen Zylinder der Brennkraftmaschine verbunden.

In die zylinderförmigen Öffnungen 7a, 7b der Konsole 1 sind die in der Figur 1b dargestellten Walzen-Drehschieber 8a, 8b einsetzbar. Diese Walzen-Drehschieber 8a, 8b weisen je einen Zylindermantel 9a, 9b auf, der stirnseitig bei einer Schweißkonstruktion von kreisförmigen Deckeln verschlossen ist und wobei an den Deckel jeweils zylinderförmige Lagerstumpfen zur Lagerung und zur Befestigung von Betätigungseinrichtungen angebracht sind. In die Zylindermäntel 9a, 9b sind jeweils drei übereinanderliegende kreisrunde Öffnungen 10a, 10b, 10c eingearbeitet, die den Zylindermantel 9a, 9b vollständig durchdringen. Dabei kann es sinnvoll und vorgesehen sein, daß die Öffnungen 10a, 10b, 10c bei hohlgestalteten Walzen-Drehschiebern 9a, 9b durch entsprechende Einsätze miteinander auf gegenüberliegenden Seiten verbunden sind. Dadurch können dann ggfs. Strömungsverluste verringert oder vermieden werden.

Die Walzen-Drehschieber 8a, 8b werden - wie gesagt - in die zylinderförmigen Öffnungen 7a, 7b von oben eingesetzt und greifen mit ihren unteren zylinderförmige Lagerstumpfen in entsprechende Lagerstellen. Auf die oberen zylinderförmigen Lagerstumpfen wird zunächst ein Nutring 11a, 11b und danach je ein Runddichtring 12a, 12b aufgeschoben. Darauf wird dann ein Deckel 13a, 13b aufgesetzt und mit jeweils mehreren Schrauben 14a, 14b an der Konsole 1 befestigt. Diese Deckel 13a, 13b haben eine Öffnung, durch die der obere zylinderförmige Lagerstumpfen gerade hindurchragt. An diesem wird dann je ein Hebel 15a, 15b mit Befestigungsschrauben 16a, 16b befestigt. An diesen Hebeln 15a, 15b sind ggfs. über entsprechende Betätigungshebel ein gemeinsamer oder aber auch für jeden Walzendrehschieber ein eigenes Steuergerät anlenkbar. Dabei ist dann das Steuergerät mit dem entsprechenden Hebelmechänismus so ausgelegt, daß die Walzen-Drehschieber 8a, 8b um mindestens ca. 60° gedreht werden können. Diese Drehbewegung ermöglicht eine Verstellung der Öffnungen 10a, 10b, 10c derart, daß diese von einer die Kanäle 6a, 6b voll verschließenden in eine voll öffnende Stellung schwenkbar sind. Dabei können die Kanäle 6a, 6b im übrigen im Inneren der Konsole 1 so ausgebildet sein, daß diese in mit den Öffnungen 10a, 10b, 10c genau zusammenwirkende Teilkanäle aufgeteilt werden, die sich dann auf der Stirnseite 2 der Konsole dann ggfs. wieder in zumindest zwei Kanäle 6a, 6b oder aber auch einen gemeinsamen Kanal aufteilen bzw. vereinigen.

In dem dargestellten Ausführungsbeispiel ist es - wie zuvor beschrieben - so, daß die Ladeluft- beziehungsweise Gemischkühler in Strömungsrichtung der Ladeluft beziehungsweise des Gemisches vor den Walzen-Drehschiebern 8a, 8b angeordnet sind. Im Rahmen der Erfindung ist es aber genauso möglich, die Ladeluft- beziehungsweise Gemischkühler in Strömungsrichtung hinter den Walzen-Drehschiebern 8a, 8b anzuordnen. Außerdem ist die Erfindung nicht auf den Einsatz von zwei Walzen-Drehschiebern mit je drei Öffnungen 10a, 10b, 10c beschränkt. Es können hier auch nur ein Walzen-Drehschieber oder mehr als zwei Walzen-Drehschieber mit einer oder mehreren Öffnungen 10a, 10b, 10c vorgesehen sein.

## Patentansprüche

1. Gasmotor, insbesondere Otto-Gasmotor, bestehend aus einem Kurbelgehäuse mit zumindest einer einen Verbrennungsraum aufweisenden Zylinder-Zylinderkopf-Einheit, wobei dem Verbrennungsraum ein von einem Mischer einstellbares Luft-Gas-Gemisch zuführbar ist, dessen dem Brennraum zugeführte Menge über eine als Drehschieber ausgebildete Mengensteuereinrichtung einstellbar ist, dadurch gekennzeichnet, daß der Drehschieber in eine stirnseitig an eine Brennkrafimaschine angebaute Konsole (1) eingesetzt ist und die Konsole an beiden Seitenwänden (4a,4b) einen Befestigungsrahmen (5a, 5b) aufweist, an die Ladeluftkühler beziehungsweise Gemischkühler anschraubbar sind und daß die Befestigungsrahmen (5a, 5b) über Kanäle (6a, 6b), die von zumindest einer zylinderförmigen Öfinung (7a, 7b) durchdrungen sind, in die der Drehschieber eingesetzt ist, jenseits des Drehschiebers in die Stirnseite (2) münden und von dort in die entsprechende Ladeluftleitung beziehungsweise Gemischleitung der Brennkraftmaschine übergehen.

2. Gasmotor nach Anspruch 1,
dadurch gekennzeichnet, daß der Drehschieber ein Walzen-Drehschieber (8a, 8b) ist.

3. Gasmotor nach Anspruch 1 oder 2,
dadurch gekennzeichnet, daß in den Zylindermantel (9a, 9b) des Walzen-Drehschiebers (8a, 8b) zumindest eine den Zylinder durchdringende Öffnung (10a, 10b, 10c) eingelassen ist.

4. Gasmotor nach Anspruch 3,
dadurch gekennzeichnet, daß in den Zylindermantel (9a, 9b) drei übereinanderliegende Öffnungen (10a, 10b, 10c) eingelassen sind.

5. Gasmotor nach einem der Ansprüche 3 oder 4,
dadurch gekennzeichnet, daß die Öffnung (10a, 10b, 10c) kreisrund ausgebildet ist.

6. Gasmotor nach einem der Ansprüche 3 oder 4,
dadurch gekennzeichnet, daß die Öffnung (10a, 10b, 10c) oval ausgebildet ist.

7. Gasmotor nach einem der vorherigen Ansprüche,
dadurch gekennzeichnet, daß der Walzen-Drehschieber (8a, 8b) rohrförmig ausgebildet ist.

8. Gasmotor nach einem der Ansprüche 3 bis 7,
dadurch gekennzeichnet, daß die Wandstärke des Zylindermantels (9a, 9b) zumindest in den die Öffnung (10a, 10b, 10c) umgebenden Bereichen festigkeitsmechanisch und strömungswiderstandsmäßig optimiert ist.

9. Gasmotor nach einem der Ansprüche 2 bis 8,
dadurch gekennzeichnet, daß der Walzen-Drehschieber (8a, 8b) aus einem Gußwerkstoff gefertigt ist.

10. Gasmotor nach einem der Ansprüche 2 bis 9,
dadurch gekennzeichnet, daß der Walzen-Drehschieber (8a, 8b) aus einem rohrförmigen Stahlwerkstoff gefertigt ist.

## Claims

1. A gas engine, especially a spark ignition engine, comprising a crankcase with at least one cylinder-cylinder head unit with a combustion chamber, whereby an air-gas mixture adjustable by a mixer can be fed to the combustion chamber, whose amount fed into the combustion chamber can be adjusted by a volume control device configured as a rotary disc valve,
characterised in that the rotary disc valve is installed in a console (1) attached to the front end of an internal combustion engine and the console has a fastening frame (5a, 5b) on both its side walls (4a, 4b), onto which the charge air cooler or mixture cooler can be screwed and that the fastening frame (5a, 5b) opens, via channels (6a, 6b) which are penetrated by at least one cylinder shaped opening (7a, 7b), in which the rotary disc valve is inserted, into the front end (2) on the other side of the rotary disc valve and from there pass into the corresponding charge air or mixture feed line of the internal combustion engine.

2. A gas engine according to Claim 1,
characterised in that the rotary disc valve is a rotary cylinder valve (8a, 8b).

3. A gas engine according to Claim 1 or Claim 2,
characterised in that at least one opening (10a, 10b, 10c) is set in the cylinder wall (9a, 9b) of the rotary cylinder valve (8a, 8b).

4. A gas engine according to Claim 3,
characterised in that three openings (10a, 10b, 10c) are set in the cylinder wall (9a, 9b), lying above one another.

5. A gas engine according to Claim 3 or Claim 4,
characterised in that the opening (10a, 10b, 10c) is formed circular.

6. A gas engine according to Claim 3 or Claim 4,
characterised in that the opening (10a, 10b, 10c) is formed oval.

7. A gas engine according to any preceding Claim,
characterised in that the rotary cylinder valve (8a, 8b) is formed tubular.

8. A gas engine according to any one of Claims 3 to 7,
characterised in that the wall thickness of the cylinder wall (9a, 9b) is optimised for mechanical stability and flow resistance at least in the regions surrounding the opening (10a, 10b, 10c).

9. A gas engine according to any one of Claims 2 to 8,
characterised in that the rotary cylinder valve (8a, 8b) is manufactured from a cast material.

10. A gas engine according to any one of the Claims 2 to 9,
characterised in that the rotary cylinder valve (8a, 8b) is manufactured from a tube formed steel material.

## Revendications

1. Moteur à gaz, notamment moteur à allumage commandé, ayant un carter de vilebrequin avec au moins un ensemble cylindre-culasse formant au moins une chambre de combustion, la chambre de combustion recevant un mélange air/gaz réglable par un mélangeur et dont la quantité alimentant la chambre de combustion se règle par une installation de réglage de quantité en forme de tiroir rotatif,
caractérisé en ce que
• le tiroir rotatif est logé dans une console (1) montée, du côté frontal, sur un moteur à combustion interne, et sur les deux parois latérales (4a, 4b) la console comporte un châssis de fixation (5a, 5b) sur lequel on peut visser le radiateur du turbocompresseur ou le radiateur du mélangeur, et
• les châssis de fixation (5a, 5b) débouchent de l'autre côté du tiroir dans la face frontale (2) par des canaux (6a, 6b) traversés au moins par une ouverture de forme cylindrique (7a, 7b) recevant le tiroir rotatif, et rejoignent de là, la conduite d'air de suralimentation ou la conduite de mélange alimentant le moteur à combustion interne.

2. Moteur à gaz selon la revendication 1,
caractérisé en ce que
le tiroir rotatif est un boisseau (8a, 8b).

3. Moteur à gaz selon les revendications 1 ou 2,
caractérisé en ce qu'
au moins une ouverture (10a, 10b, 10c) traversant le cylindre est logée dans l'enveloppe cylindrique (9a, 9b) du boisseau (8a, 8b).

4. Moteur à gaz selon la revendication 3,
caractérisé par
trois ouvertures (10a, 10b, 10c) superposées, réalisées dans l'enveloppe cylindrique (9a, 9b).

5. Moteur à gaz selon l'une des revendications 3 ou 4,
caractérisé en ce que
l'ouverture (10a, 10b, 10c) est circulaire.

6. Moteur à gaz selon l'une des revendications 3 ou 4,
caractérisé en ce que
l'ouverture (10a, 10b, 10c) est ovale.

7. Moteur à gaz selon l'une quelconque des revendications précédentes,
caractérisé en ce que
le boisseau (8a, 8b) est de forme tubulaire.

8. Moteur à gaz selon l'une quelconque des revendications 3 à 7,
caractérisé en ce que
l'épaisseur de la paroi de l'enveloppe cylindrique (9a, 9b) est optimisée du point de vue de la résistance des matériaux et des pertes de charge, au moins dans les zones autour des orifices (10a, 10b, 10c).

9. Moteur à gaz selon l'une quelconque des revendications 2 à 8,
caractérisé en ce que
le boisseau (8a, 8b) est en fonte.

10. Moteur à gaz selon l'une quelconque des revendications 2 à 9,
caractérisé en ce que
le boisseau (8a, 8b) est une pièce d'acier tubulaire.
